Europäisches Patentamt

European Patent Office

Office européen des brevets

(11) Numéro de publication: **0 122 852**
**A1**

## (12) DEMANDE DE BREVET EUROPEEN

(21) Numéro de dépôt: **84400703.9**

(22) Date de dépôt: **10.04.84**

(51) Int. Cl.³: **H 04 Q 3/00**
**H 04 M 11/06**

(30) Priorité: **11.04.83 FR 8305854**

(43) Date de publication de la demande:
**24.10.84 Bulletin 84/43**

(84) Etats contractants désignés:
**AT BE CH DE GB IT LI LU NL SE**

(71) Demandeur: **UNITE TECHNIQUE ROSNY, Société dite:**
**17 rue Montgolfier Z.I.**
**F-93115 Rosny-sous-Bois Cedex(FR)**

(72) Inventeur: **Ygorra, Francois**
**Le Creuset Sallertaine**
**F-85300 Challans(FR)**

(74) Mandataire: **Armengaud, Alain**
**Cabinet ARMENGAUD AINE 3 Avenue Bugeaud**
**F-75116 Paris(FR)**

(54) Relais modulateur, notamment pour installations de télécommunications.

(57) Relais modulateur, notamment pour installations de télécommunications, permettant la réalisation d'interfaces des ordinateurs et des réseaux, caractérisé en ce qu'il comporte un photo-coupleur (P), monté dans un pont de diodes rapides (D) et protégé par une diode de Zener (Z₁) correctement polarisée dans le pont, la ligne informatique étant reliée au modulateur.

0122852

1

## Relais modulateur, notamment pour installations de télécommunications

La présente invention a pour objet un relais modulateur destiné plus particulièrement aux installations de télécommunications.

On sait que l'évolution technique actuelle des installations de télécommunications s'oriente vers l'option appelée Télématique, et que le problème important à résoudre est celui de la connexion des lignes de transmission aux appareils électroniques. La présente invention se propose d'apporter des moyens permettant de faciliter la réalisation d'interfaces des ordinateurs avec les réseaux (EDF, Télécommunications, Satellites en prise directe sur antenne, etc.).

Le remplacement des interfaces lignes des appareils de téléphonie et d'informatique exige la commande d'un interrupteur-modulateur de courant dans les plages de tension à moduler, selon modulation du nombre de photo-coupleurs actifs, c'est-à-dire de 0 à $\pm$ 60 V, et de 0 à 40mA, ces valeurs étant d'abord fixées par les paramètres d'alimentation de la ligne informatique, puis, ensuite, modulées dans les normes de transmission à fréquence vocale, sans limitation de fréquence autre que celles dues aux caractéristiques des photo-coupleurs utilisés dans le dispositif objet de la présente invention.

Le dispositif selon l'invention, permettant de remplir les objectifs exposés ci-dessus, est caractérisé essentiellement en ce qu'il comprend un photo-coupleur inséré dans un pont de diodes rapides et protégé par une diode de Zener correctement polarisée dans le pont, un amplificateur assurant la modulation.

Selon une caractéristique de cette invention, la commande de modulation secteur (c'est-à-dire, par exemple, du réseau EDF) peut s'effectuer par l'intermédiaire d'un photo-triac.

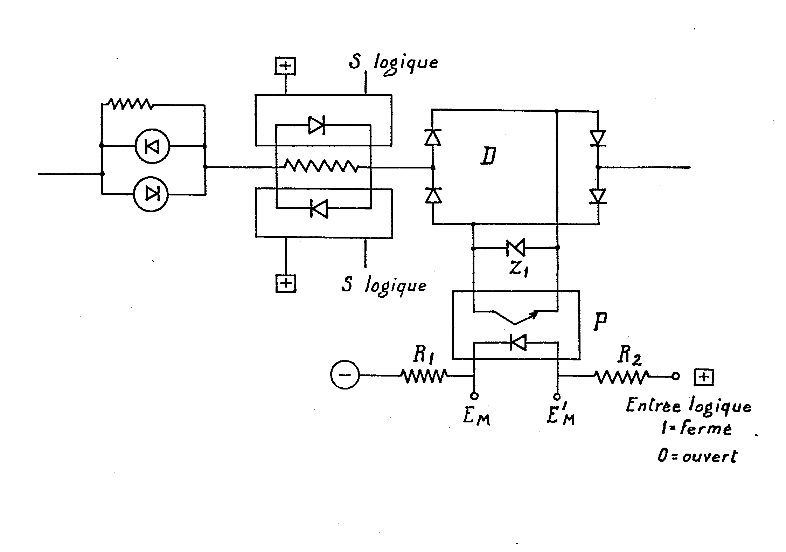

D'autres caractéristiques et avantages de cette invention ressortiront de la description faite ci-après en référence au dessin annexé, qui en illustre un exemple de réalisation non limitatif. La Figure unique du dessin représente le schéma électrique du relais dynamique objet de l'invention.

Selon l'invention, on se propose d'apporter un relais dynamique permettant de moduler le courant de ligne dans une plage de "tout à rien", en se libérant des contraintes de respect des polarités de fils. Ce relais comprend essentiellement un photo-coupleur P, inséré dans un pont de diodes rapides D et protégé par une diode de Zener $Z_1$, montée à l'intérieur du pont D, comme on peut le voir sur le schéma de la Figure annexée. La modulation est assurée par un amplificateur.

Selon l'invention, deux entrées de modulation sont possibles : la première, en $E_M$, entre la résistance $R_1$ et la cathode de la photo-diode, et la seconde entre la résistance $R_2$ et l'anode de cette photo-diode (entrée de modulation $E'_M$).

La ligne informatique, réalisée selon les normes qui la rendent apte à être raccordée à un appareil téléphonique courant, est reliée au modulateur. Celui-ci est activé à partir de deux points : à une extré-

mité de commande, par la fonction ouvert/fermé, qui se referme en courant, sur l'extrémité modulation qui, au départ, est dans sa plage fixée MINI ou MAXI, par polarisation du modulateur. Le relais selon l'invention est un relais dynamique qui fonctionne avec la tension en ligne, l'entrée logique activant l'ensemble. Lors de la fermeture du relais au courant nominal des deux résistances $R_1$ et $R_2$, branchées sur la diode de commande du photo-coupleur P, les organes à commander sont avertis de la présence d'une demande d'accès, la suite des commandes dépendant alors des possibilités du réseau : fréquences vocales, impulsions de boucles ouvertes/fermées, codes digitaux, etc. Par ailleurs, l'opérateur est averti par des diodes optiques de la présence d'un courant en ligne, d'une part, et du sens de ce courant dans l'appareil, d'autre part.

Si la commande est réalisée par un micro-ordinateur, on prévoit, selon l'invention, un dispositif annexe pour indiquer la présence et le sens du courant à l'appareil de commande qui utilise ces informations, particulièrement dans les programmes d'auto-tests et d'auto-contrôles.

Pour permettre au dispositif objet de l'invention de commander n'importe quel type de tension et d'intensité, on peut disposer les photo-coupleurs en série sur leur sortie, et en série/parallèle sur leurs entrées, ces photo-coupleurs demeurant ainsi protégés chacun par une diode de Zener, convenablement polarisée.

On a vu qu'un avantage important du relais dynamique selon la présente invention était de permettre de moduler, à partir de l'application d'un processus technique, le courant de ligne dans la plage de "tout à rien", en se libérant par ailleurs des contraintes de respect de polarités des fils. Cette caractéristique constitue un avantage remarquable, permettant notamment l'incorporation du dispositif selon cette invention dans tous les appareils, portables ou non, comportant des composants électroniques fonctionnant à faible consommation, sur alimentation batterie, en isolant parfaitement la ligne des appareils par élimination des couplages inductifs entrée $\rightleftarrows$ sortie.

Par ailleurs, le relais selon l'invention permet de réaliser une modulation vocale du courant de ligne sans condensateur ni transformateur avec isolement, ce qui permet la suppression du contact direct avec la ligne téléphonique (suppression des couplages inductifs entrée/sortie).

En outre, le relais selon l'invention permet de réaliser une modulation en impulsion de numérotation décimale (C.A.D. coupure et établissement du courant de ligne), selon une cadence normalisée.

Enfin, la technologie de ce relais lui permet de jouer le rôle d'un crochet commutateur (c'est-à-dire d'effectuer un décrochement de la ligne sans l'intervention d'autres équipements), tout en laissant passer les résiduelles des courants de tension supérieurs à la tension normale de la diode de Zener (par exemple du courant d'appel).

Il demeure bien entendu que cette invention n'est pas limitée aux exemples de réalisation décrits ou représentés ici, mais qu'elle en englobe toutes les variantes.

Revendications de brevet

1 - Relais modulateur, notamment pour installations de télécommunications, permettant la réalisation d'interfaces des ordinateurs et des réseaux, caractérisé en ce qu'il comporte un photo-coupleur (P), monté dans un pont de diodes rapides (D) et protégé par une diode de Zener $(Z_1)$ correctement polarisée dans le pont, la ligne informatique étant reliée au modulateur.

2 - Relais modulateur selon la revendication 1, caractérisé en ce que la commande de modulation secteur s'effectue par l'intermédiaire d'un photo-triac.

3 - Relais modulateur selon l'une des revendications 1 ou 2, appliqué à une commande par micro-ordinateur, caractérisé en ce qu'il comporte un dispositif conçu de façon à indiquer la présence et le sens d'un courant à l'appareil de commande.

4 - Relais modulateur selon l'une quelconque des revendications précédentes, caractérisé en ce qu'il comporte plusieurs photo-coupleurs, disposés en série sur leur sortie et en série/parallèle sur leurs entrées, les photo-coupleurs étant chacun protégé par une diode de Zener convenablement polarisée.

S logique

D

S logique

$Z_1$

P

$R_1$

$R_2$

$E_M$

$E'_M$

Entrée logique
1=fermé
0=ouvert

**0122852**

Numéro de la demande

# RAPPORT DE RECHERCHE EUROPEENNE

Office européen des brevets

EP 84 40 0703

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 251 975 (L.C.T.)<br>* Page 2, lignes 19-26; page 4, ligne 24 - page 5, ligne 35 * | 1 | H 04 Q 3/00<br>H 04 M 11/06 |
| | --- | | |
| A | FR-A-2 326 100 (ERICSSON)<br>* Page 4, ligne 19 - page 6, ligne 4 * | 1,3,4 | |
| | --- | | |
| A | FR-A-2 324 183 (INTERNATIONAL STANDARD ELECTRIC)<br>* Page 7, ligne 18 - page 8, ligne 18 * | 1 | |
| | --- | | |
| A | US-A-4 201 897 (DORTH et al.)<br>* Colonne 2, lignes 25-61 * | 2 | |
| | ----- | | DOMAINES TECHNIQUES RECHERCHES (Int. Cl. 3)<br><br>H 04 Q<br>H 04 M |

Le présent rapport de recherche a été établi pour toutes les revendications

| Lieu de la recherche | Date d'achèvement de la recherche | Examinateur |
|---|---|---|
| LA HAYE | 27-06-1984 | GULDNER H.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

OEB Form 1503. 03.82